# EUROPEAN PATENT SPECIFICATION

(11) **EP 1 584 646 B1**
(45) Date of publication and mention of the grant of the patent: **06.06.2007**
(21) Application number: 05102773.8
(22) Date of filing: 08.04.2005
(51) Int. Cl.: C08J 7/14, G02B 1/04, G02B 1/10

(54) **Process for producing hard-coated optical materials**
Verfahren zur Herstellung von optischen Materialien mit einer harten Beschichtung
Procédé de fabrication de matériaux optiques ayant un revêtement dur.

(30) Priority: 09.04.2004 JP 2004115017
(43) Date of publication of application: 12.10.2005
(73) Proprietor: MITSUBISHI GAS CHEMICAL COMPANY, INC., Chiyoda-ku, Tokyo (JP)
(72) Inventor: Okada, Hiroyuki, Mitsubishi Gas Chemical Co., Inc., Katsushika-ku, Tokyo (JP); Takeuchi, Motoharu, Mitsubishi Gas Chem. Co., Inc., Katsushika-ku, Tokyo (JP); Johno, Masahiro, Mitsubishi Gas Chemical Co., Inc., Katsushika-ku, Tokyo (JP)
(74) Representative: Gille Hrabal Struck Neidlein Prop Roos

(56) References cited:
- EP-A- 0 928 802
- EP-A- 1 006 374
- EP-A- 1 024 223
- US-A- 4 401 718
- US-A- 4 921 497
- PATENT ABSTRACTS OF JAPAN vol. 2000, no. 20, 10 July 2001 (2001-07-10) & JP 2001 083301 A (HOYA CORP), 30 March 2001 (2001-03-30)

## Description

### BACKGROUND OF THE INVENTION

### 1. Field of the Invention

The present invention relates to a process for producing plastic materials, in particular, optical materials such as plastic lenses, prisms, optical fibers, information recording media and filters, more particularly plastic spectacle lenses.

### 2. Description of the Prior Art

Glass materials have been largely replaced by plastic materials as the raw materials for optical materials because of easy processability, high mechanical strength and light weight of plastic materials. In particular, most spectacle lenses are recently produced from the plastic materials. However, since the plastic materials easily get scratched because of their low surface hardness as compared with that of glass materials, the surface of plastic materials is usually hard-coated or covered with a hard coat film. Plastic spectacle lenses are generally produced by hard-coating after forming an intermediate layer such a primer layer on the surface of plastic lens to improve the adhesion strength between the plastic lens and the hard coat and the impact resistance of the hard-coated plastic lens (Japanese Patent 3375793 and JP 10-260301A, 11-167002A, 2001-201602A, 2001-288406A, 2001-288412A and 2003-195003A). In the production of high-refractive plastic lenses, particularly, in the production of lenses from a raw material having episulfide group, the technique of hard-coating is widely employed (JP 2001-201602A, 2001-288406A, 2001-288412A and 2003-195003A). However, the formation of the intermediate layer such as a primer layer is a complicated process and requires strictly controlled conditions and special expensive apparatuses. Therefore, it has been demanded to omit the formation of intermediate layer.

If the intermediate layer such as primer layer is omitted, the initial adhesion strength is lowered (comparative examples of JP 11-167002A) or the adhesion strength after the test for water resistance (in warm water at 50°C for 5 h) is lowered (comparative examples of Japanese Patent 3375793). To avoid these problems, there have been proposed methods of modifying the surface conditions of plastic substrates by plasma treatment, activated oxygen treatment or alkali treatment (JP 2001-83301A and 2000-206305A and WO 01/088048). However, in the proposed methods, the adhesion strength after a test for durability such as moisture resistance is not considered, and the adhesion strength after a lapse of time is insufficient for the practical needs. For example, in the proposed treatment by dipping a lens substrate produced from a raw compound having an episulfide group in an ozone water, only the initial adhesion strength is evaluated (examples of JP 2001-83301A), and, in the proposed treatment by dipping a lens substrate in an aqueous solution of sodium hydroxide, only the initial adhesion strength or the adhesion strength after storage under mild conditions (at 30°C for seven days or at 80°C for 10 min) are evaluated (examples of WO 01/088048 and JP 2000-206305A).

### SUMMARY OF THE INVENTION

The invention is directed to the development of a process for producing a hard-coated optical material made of a raw compound having an episulfide group, which has a hard coat having a high adhesion strength and exhibits no change with time in its properties although the formation of an intermediate layer such as a primer layer is omitted.

As a result of extensive research, it has been found that a hard coat having a good adhesion strength to a plastic substrate which remains good even after a humidity resistance test is formed by directly hard-coating a plastic substrate without forming an intermediate layer such as a primer layer after dipping the plastic substrate in an acidic substance. The invention is based on this finding.

Thus, the invention relates to a process for producing a hard-coated optical material, comprising:
dipping a substrate in an acidic substance, the substrate being made of a cured product produced by polymerizing a composition containing at least one compound having one or more β-epithiopropylthio structures represented by the following formula 1: 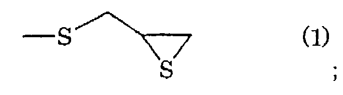 and
forming a hard coat on a surface of the substrate.

### DETAILED DESCRIPTION OF THE INVENTION

The dipping treatment with the acidic substance is performed by dipping a plastic substrate in a liquid containing an acidic substance (acidic inorganic compound and/or acidic organic compound). The dipping treatment serves as a pretreatment before hard-coating, and the hard coat formed after the dipping treatment exhibits a good adhesion strength even after various durability tests.

Examples of the acidic inorganic compound include hydrogen peroxide, nitric acid, hydrochloric acid, perchloric acid, hypochlorous acid, chlorine dioxide, hydrofluoric acid, sulfuric acid, fuming sulfuric acid, boric acid, arsenic acid, arsenious acid, pyroarsenic acid, phosphoric acid, phosphorous acid, hypophosphorous acid, phosphorus oxychloride, phosphorus oxybromide, phosphorus trichloride, phosphorus tribromide, phosphorus pentachloride, prussic acid, chromic acid, nitric anhydride, sulfuric anhydride, boron oxide, arsenic pentaoxide, phosphorus pentaoxide, chromic anhydride, sulfuryl chloride, silica gel, silica alumina, silicic acids and boron tetrafluoride. Examples of the acidic organic compound include carboxylic acids, mono- or diesters of phosphoric acid, mono- or diesters of phosphorous acid, sulfonic acids, sulfinic acids, phenols and mercaptans.

These acidic substances may be used singly or in combination of two or more. Of these compounds, preferred are hydrogen peroxide, inorganic acids, sulfonic acids and phenols, more preferred are hydrogen peroxide and inorganic acids, still more preferred are hydrogen peroxide, nitric acid, hydrochloric acid, sulfuric acid, phosphoric acid, phosphorous acid and sulfuric anhydride, particularly preferred are sulfuric acid and hydrogen peroxide, and most preferred is a mixture of sulfuric acid and hydrogen peroxide.

The total concentration of the acidic substance in the dipping liquid is preferably from 0.1 to 99.9% by weight, more preferably from 1 to 90% by weight, still more preferably from 5 to 90% by weight, particularly preferably from 10 to 90% by weight and most preferably from 20 to 80% by weight.

The component of the dipping liquid other than the acidic substance is not particularly limited and mainly a solvent such as water, alcohols, ethers, ketones, esters, nitrogen-containing compounds such as compounds having an amide group or a nitro group, and sulfur-containing compounds such as carbon disulfide and dimethyl sulfoxide, with water and alcohols being preferred. These solvents may be used alone or in combination of two or more. Additives such as known surfactants may be added, if desired.

The dipping time for treatment may be short or long as long as the effect by dipping is sufficiently obtained, and preferably from one second to 24 h in view of practicability. The dipping temperature is also not particularly limited, and preferably from -20 to 200°C, more preferably from 0 to 200°C, and still more preferably from 0 to 150°C. Since a sufficient effect of treatment is obtained and the deformation, degradation or discoloration of the plastic substrate being treated is avoided, the dipping temperature is preferably controlled within the above range.

Before or after dipping, if desired, the plastic substrate may be washed with water, an aqueous solution of alkali, an aqueous solution of acid, an organic solvent, etc., the plastic substrate may be irradiated with activated energy rays such as plasma, ultraviolet light, infrared light, visible light, X-rays and other radiation, or the plastic substrate may be heated, because the effect of treatment is enhanced and a uniform hard coat is formed. It is particularly preferred to wash the plastic substrate with a 1-50 wt % aqueous solution of alkali such as sodium hydroxide after the dipping treatment.

The effect of the dipping treatment may be enhanced by stirring or applying ultrasonic wave or vibration during the dipping. In some cases, the dipping liquid does not reach the desired dipping temperature by merely heating under atmospheric pressure because of boiling at temperatures lower than the desired dipping temperature, although depending on the type of the acidic substance used. In such cases, the desired temperature may be attained by heating under pressure or adding a component capable of elevating the boiling point. The elevation of the boiling point under pressure may be conducted preferably under a pressure from 1.1 to 20 atm using a pressure vessel or an autoclave.

The hard coat to be formed in the invention is a coat on the surface of the plastic substrate, which is little discolored and excellent in transparency, uniformity, adhesion to plastic substrate and surface hardness. As such a hard coat, conventional hard coats for plastic lens are usable as long as their inherent performance of improving the scratch resistance is attained. The hard coat may be formed by applying a hard coat liquid having a heat-curable resin or a resin each being sensitive to activated energy rays dissolved or dispersed onto the plastic substrate, and then curing the resin by heating and/or irradiation of activated energy ray. Examples of the activated energy ray include ultraviolet light, infrared light, visible light, X-rays and other radiation, with ultraviolet light being generally used.

Known resins and heat-curable resins each being sensitive to activated energy rays may be used as the hard coat-forming component. Examples of the resins curable by activated energy ray include (meth)acrylic resins, urethane acrylate resins, epoxy acrylate resins, unsaturated polyester resins, phosphazene resins, melamine resins and acrylic silane resins. Examples of the heat-curable resins include melamine resins, silicone resins, urethane resins and acrylic resins, with silicone resins, for example, silane compounds described below, being particularly preferred.

The hard coat is formed, for example, by applying a hard coat liquid containing fine particles of metal oxide and silane compound on the plastic substrate and then curing the hard coat solution. The hard coat liquid may further contain colloidal silica, multi-functional epoxy compound, etc. The examples of fine particles of metal oxide include fine particles of SiO₂, Al₂O₃, SnO₂, Sb₂O₅, Ta₂O₅, CeO₂, La₂O₃, Fe₂O₃, ZnO, WO₃, ZrO₂, In₂O₃ and TiO₂, and fine composite particles of metal oxides of two or more metals. The fine particles of metal oxide are used in the form of colloidal dispersion in a dispersing medium such as water, alcohols and other organic solvent. Examples of the silane compounds include vinyltrialkoxysilane, vinyltrichlorosilane, vinyltri(β-methoxyethoxy)silane, allyltrialkoxysilane, acryloyloxypropyltrialkoxysilane, methacryloyloxypropyltrialkoxysilane, methacryloyloxypropyldialkoxymethylsilane, γ-glycidoxypropyltrialkoxysilane, β-(3,4-epoxycyclohexyl)ethyltrialkoxysilane, mercaptopropyltrialkoxysilane, γ-aminopropyltrialkoxysilane, N-β-(aminoethyl)-γ-aminopropylmethyldialkoxysilane, tetramethoxysilane, tetraethoxysilane, tetrapropoxysilane, tetraisopropoxysilane, tetrabutoxysilane, tetraphenoxysilane, tetraacetoxysilane, tetraallyloxysilane, tetrakis(2-methoxyethoxy)silane, tetrakis(2-ethylbutoxy)silane and tetrakis(2-ethylhexyloxy)silane. Colloidal silica is prepared, for example, by dispersing fine silica particles having a particle size of 1 to 100 µm in a medium such as alcohols and water. Examples of the multi-functional epoxy compounds include aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxypivalate, trimethylolpropane diglycidyl ether, trimethylolpropane triglycidyl ether, glycelol diglycidyl ether, glycelol triglycidyl ether, diglycelol diglycidyl ether, diglycelol triglycidyl ether, diglycelol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydrolxyethyl) isocyanurate, triglycidyl ether of tris(2-hydrolxyethyl) isocyanurate; alicyclic epoxy compounds such as isophoronediol diglycidyl ether, bis-2,2-hydroxycyclohexylpropane diglycidyl ether; and aromatic epoxy compounds such as resorcin diglycidyl ether, bisphenol A diglycidyl ether, bisphenol F diglycidyl ether bisphenol S diglycidyl ether, orthophthalic diglycidyl ester, phenol novolak polyglycidyl ether, cresol novolak polyglycidyl ether. The hard coat solution may further contain known additives such as leveling agents for improving the spreadability, ultraviolet absorbers and anti-oxidants for improving the weatherability, dyes and pigments.

To promote the curing of the hard coat-forming component, the hard coat liquid may contain, if desired, a known initiator for heat polymerization and/or a known initiator for activated energy ray polymerization. The amount of the polymerization initiator to be added is preferably from 0.001 to 10 parts by weight and more preferably from 0.01 to 5 parts by weight per 100 parts by weight of the hard coat-forming component.

To prevent interference fringes by controlling the refractive index and to improve the surface hardness, the hard coat liquid may further contain fine particles, preferably fine particles of metal oxides. Examples of the metal oxides include zinc oxide, aluminum oxide, silicon oxide, titanium oxide, zirconium oxide, tin oxide, beryllium oxide, germanium oxide, antimony oxide, tungsten oxide and cerium oxide. These fine particles of metal oxides may be used alone or in combination of two or more which may be in the form of either a composite or a solid solution.

The hard coat liquid may be applied on the plastic substrate by dipping or, if desired, using a coating apparatus such as hand coater, bar coater, roll coater, spin coater and sprayer. The hard coat liquid is handled preferably in a clean environment such as a clean room to avoid the contamination by dusts or foreign matters. It is preferable to filter the hard coat liquid through a filter made of polytetrafluoroethane or poly(ethylene terephthalate) before use, because the resultant hard-coated optical material has a high transparency.

The curing operation is conducted, for example, under a stream of inert gas such as nitrogen and helium while covering the plastic substrate coated with the hard coat liquid with a film, if appropriate. In the curing by heating and the curing by a combination of irradiation of activated energy ray and heating, the curing temperature is preferably from room temperature to 200°C and more preferably from room temperature to 150°C. By regulating the curing temperature within the above range, the curing proceeds sufficiently and the cracking of hard coat and the yellowing of plastic substrate and hard coat are prevented.

If desired, the hard-coated optical material may be further coated with an antireflection film, a water-repellent film or a hydrophilic film. The antireflection film may be a single-layered film or a multi-layered film made of an inorganic oxide such as silicon dioxide, titanium oxide and zirconium oxide, and imparts the antireflection properties to the hard-coated optical material. The antireflection film is formed by a known vacuum deposition method, ion-assist method, etc. The water-repellent film is made of poly-functional fluorine-containing hydrocarbon compounds or polyfunctional fluorine-containing silicon compounds. The functional group is preferably alkoxy, amino and mercapto. The water-repellent film improves the resistance to discoloration due to water and the resistance to staining of the hard-coated optical material. The hydrophilic film is made of a material containing a surfactant or a photocatalyst such as titanium oxide. The hydrophilic film improves the resistance to clouding and staining of the hard-coated optical material. The water-repellent film and/or the hydrophilic film is usually formed on the antireflection film.

The plastic substrate used in the present invention is made of a resin obtained by polymerization-curing a composition containing at least one episulfide compound having one or more β-epithiopropylthio structures represented by the following formula 1:

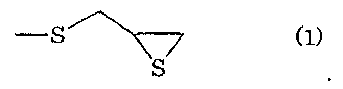

The episulfide compound is preferably represented by the following formula 2: 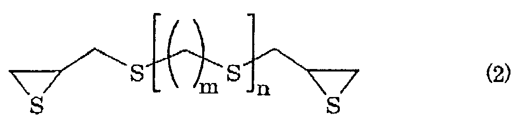 wherein m is an integer of 0 to 4; and n is an integer of 0 to 2,
because the effect of the invention is extremely enhanced.

Examples of the episulfide compounds include bis (β-epithiopropyl) sulfide, bis(β-epithiopropyl) disulfide, bis(β-epithiopropyl) trisulfide, bis(β-epithiopropylthio)methane, 1,2-bis(β-epithiopropylthio)ethane, 1,3-bis(β-epithiopropylthio)propane, 1,2-bis(β-epithiopropylthio)propane, 1,4-bis(β-epithiopropylthio)butane, 1,5-bis(β-epithiopropylthio)pentane, 1,6-bis(β-epithiopropylthio)hexane, bis(β-epithiopropylthioethyl) sulfide, tetrakis(β-epithiopropylthiomethyl)methane, 1,1,1-tris(β-epithiopropylthiomethyl)propane, 1,5-bis(β-epithiopropylthio)-2-(β-epithiopropylthiomethyl)-3-thiapentane, 1,5-bis(β-epithiopropylthio)-2,4-bis(β-epithiopropyltliomethy)-3-thiapentane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,8-bis(β-epithiopropylthio)-2,5-bis(β-epithiopropylthiomethyl)-3,6-dithiaoctane, 1,9-bis(β-epithiopropylthio)-5-(β-epithiopropylthiomethyl)-5-[(2-β-epithiopropylthioethyl)thiomethyl]-3,7-dithianonane, 1,10-bis(β-epithiopropylthio)-5,6-bis[(2-β-epithiopropylthioethyl)thio]-3,6,9-trithiadecane, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiaundecane, 1,11-bis(β-epithiopropylthio)-4,7-bis(β-epithiopropylthiomethyl)-3,6,9-trithiaundecane, 2,5-bis(epithiopropylthiomethyl)-1,4-dithiane, 2,4,6-tris(epithiopropylthiomethyl)-1,3,5-dithiane, 1,3- or 1,4-bis(β-epithiopropylthio)benzene, (1,3 or 1,4)-bis(β-epithiopropylthiomethyl)benzene, bis[4-(β-epithiopropylthio)phenyl]methane, 2,2-bis[4-(β-epithiopropylthio)phenyl]propane, bis[4-(β-epithiopropylthio)phenyl]sulfide, bis[4-(β-epithiopropylthio)phenyl]sulfone and 4,4'-bis(β-epithiopropylthio)biphenyl, with bis(β-epithiopropyl) sulfide and bis(β-epithiopropyl) disulfide being more preferred, and bis(β-epithiopropyl) sulfide being particularly preferred.

An optical material obtained by polymerization-curing a composition containing the episulfide compound and a compound having at least one SH group is low in yellowness and high in transmittance and optical performance. The use of a compound having two or more SH groups is particularly preferred because the heat resistance of the optical material is enhanced. Examples of the compound having at least one SH group include mercaptans and thiophenols each optionally having unsaturated group such as vinyl, aromatic vinyl, methacryl, acryl and allyl, which are disclosed in JP 2003-26753A. The total amount thereof to be used is preferably from 1 to 50 parts by weight, preferably from 3 to 40 parts by weight and more preferably from 5 to 30 parts by weight per 100 parts by weight of the total episulfide compounds.

Since the effect of the invention on optical performance becomes remarkable, the refractive index (nd) of the plastic substrate is preferably 1.57 or more, more preferably 1.65 or more, and most preferably 1.70 or more.

The present invention is described in more detail by reference to the following examples. However, it should be noted that the following examples are only illustrative and not intended to limit the invention thereto.

The initial appearance and adhesion strength of the hard-coated optical material, and the appearance, adhesion strength and refractive index after the humidity resistance test were evaluated by the following methods.

### (a) Appearance

The appearance before forming the hard coat and the appearance of the hard-coated optical material were visually compared.
A: No change
B: Almost no change
C: Significant change

### (b) Adhesion Strength

The adhesion strength was evaluated by a cross cut tape test according to JIS D-0202. The hard coat was cut by a cutting knife in a lattice pattern with 1-mm intervals to form hundred small squares with 1 mm² area. An adhesive tape (tradename "Cellotape" available from Nichiban Co., Ltd.) was firmly pressed and bonded to the lattice pattern, and then forcibly peeled off at a peel angle of 90°. Thereafter, the hard coat was observed to examine the remaining cross-cut squares.
A: Substantially no peeling
B: Slight peeling
C: Significant peeling

### (c) Appearance and Adhesion Strength after Humidity Resistance Test

The hard-coated optical material was allowed to stand at 60°C and a humidity of 99% for seven days, and then the appearance and adhesion strength were determined in the same methods of (a) and (b).

### (d) Refractive Index (nd):

Measured at 25°C using an Abbe refractometer.

The plastic substrates A to C were prepared as follows.

### Plastic Substrate A

A homogeneous mixture of 100 parts by weight bis(2,3-epithiopropyl) sulfide, 5 parts by weight of di(mercaptoethyl) sulfide, 0.5 part by weight of 2-(2'-hydroxy-5'-t-octylphenyl)benzotriazole and 0.5 part by weight of N,N-diethylaminoethanol was deaerated under vacuum and filtered through a 0.5 µm membrane filter made of polytetrafluoroethylene. The mixture was then cast into a 2.5 mm-thick flat plate mold constituted of two opposing glass plates and gaskets between them. The mixture was heated at 30°C for 10 h, then, the mold temperature was raised from 30°C to 100°C over 10 h, and finally the mixture was heated at 100°C for 2 h, to cure the mixture by polymerization. After allowing to be cooled down to room temperature, the product was released from the mold and then annealed at 110°C for one hour, to obtain the plastic substrate A.

### Plastic Substrate B

A homogeneous mixture of 100 parts by weight of bis(2,3-epithiopropyl) disulfide, 10 parts by weight of di(mercaptomethyl)-3,6,9-trithiaundecane-1,11-dithiol, 1.0 part by weight of 2-(2'-hydroxy-5'-t-octylphenyl)benzotriazole and 0.1 part by weight of N,N-dimethylcyclohexylamine was deaerated under vacuum and filtered through a 0.5 µm membrane filter made of polytetrafluoroethylene. The mixture was then cast into a 2.5 mm-thick flat plate mold constituted of two opposing glass plates and gaskets between them. The temperature was gradually raised from 30°C to 130°C over 22 h, to cure the mixture by polymerization. The product was released from the mold and then annealed at 130°C for one hour, to obtain the plastic substrate B.

### Plastic Substrate C

In a reaction flask, 70 parts by weight of bis(2,3-epithiopropyl) sulfide, 23 parts by weight of sulfur and 1.0 part by weight of 2-(2'-hydroxy-5'-t-octylphenyl)benzatriazole were uniformly mixed. After adding 1.0 part by weight of 2-mercapto-N-methylimidazole, the mixture was stirred at 60°C for 6 h under reduced pressure of 1 torr. After cooling down to 20°C, 5 parts by weight of di(mercaptoethyl) sulfide, 0.1 part by weight of tetrabutylphosphonium bromide and 0.2 part by weight of dibutyl tin dichloride were added. After being made into homogeneous, the mixture was deaerated under reduced pressure of 1 torr at 20°C and then filtered through a 0.5 µm membrane filter made of polytetrafluoroethylene. The mixture was then cast into a 2.5 mm-thick flat plate mold constituted of two opposing glass plates and gaskets between them. The mixture was heated at 30°C for 10 h, then, the temperature was raised from 30°C to 100°C over 10 h at constant rate, and finally the mixture was heated at 100°C for 2 h, to cure the mixture by polymerization. The product was released from the mold and then annealed at 110°C for one hour, to obtain the plastic substrate C.

The dipping treatments 1 to 5 and the dipping treatment 6 for comparison were conducted in the following manners.

### Dipping Treatment 1

After dipped in a 98% aqueous solution of sulfuric acid at 20°C for 2 min, the plastic substrate was washed sufficiently with water and dried.

### Dipping Treatment 2

After dipped in a 35% aqueous solution of hydrogen peroxide at 20°C for 60 min, the plastic substrate was washed sufficiently with water and dried.

### Dipping Treatment 8

After dipped in an aqueous solution containing 25% of sulfuric acid and 10% of hydrogen peroxide at 20°C for 60 min, the plastic substrate was washed sufficiently with water and dried.

### Dipping Treatment 4

After dipped in an aqueous solution containing 25% of sulfuric acid and 10% of hydrogen peroxide at 20°C for 60 min, the plastic substrate was washed with a 10% aqueous solution of sodium hydroxide, then washed sufficiently with water and dried.

### Dipping Treatment 5

After dipped in benzenesulfonic acid at 90°C for 60 min, the plastic substrate was washed with acetone, then washed sufficiently with water and dried.

### Dipping Treatment 6

After dipped in a 10% aqueous solution of sodium hydroxide at 20°C for 60 min, the plastic substrate was washed sufficiently with water and dried.

The hard coat was formed in the following manner.

Into a homogeneous mixture of 120 parts by weight of γ-glycidoxypropyltrimethoxysilane, 60 parts by weight of γ-glycidoxypropylmethyldimethoxysilane and 50 parts by weight of methanol, 45 parts by weight of 0.01N hydrochloric acid was added dropwise under stirring, to allow the hydrolysis to proceed sufficiently. Then, 670 parts by weight of titania-based composite fine particles (tradename "Optolake 1120Z(S-7, G)" available from Shokubai Kasei Kogyo Co., Ltd.), 1.5 parts by weight of acetylacetone ammonium and 1 part by weight of a silicone-based surfactant (tradename "Silwet L-7001" available from Nippon Unicar Co., Ltd.) were added. The mixture was stirred over night to prepare a hard coat liquid. The plastic substrate was dipped in the hard coat liquid and heated at 100°C for 2 h, to form a hard coat.

### EXAMPLES 1-7

Each plastic substrate listed in Table 1 was dipped in the hard coat liquid and then the hard coat was formed. The results of evaluations are shown in Table 1.

### COMPARATIVE EXAMPLES 1-3

The procedures of Examples 1 to 7 were repeated except that the plastic substrate was hard-coated without the dipping treatment. The results of evaluations are shown in Table 1.

### COMPARATIVE EXAMPLE 4

The procedures of Examples 1 to 5 were repeated except that the plastic substrate was subjected to dipping treatment using alkali instead of acidic substance. The results of evaluations are shown in Table 1.

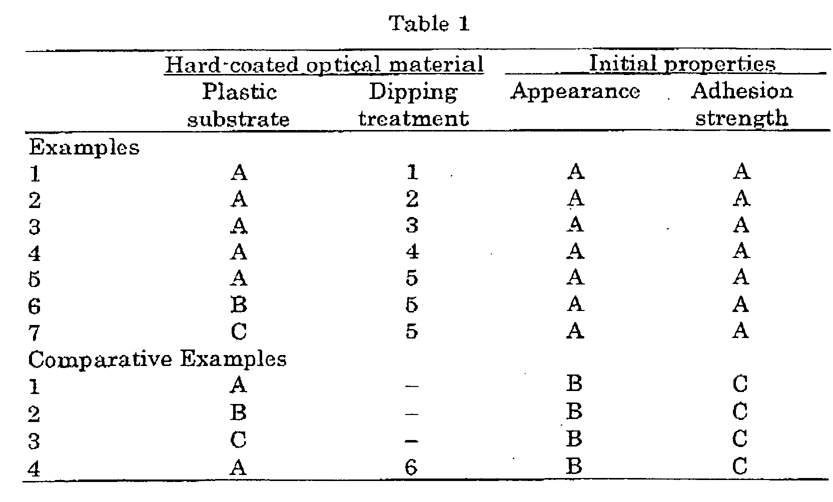

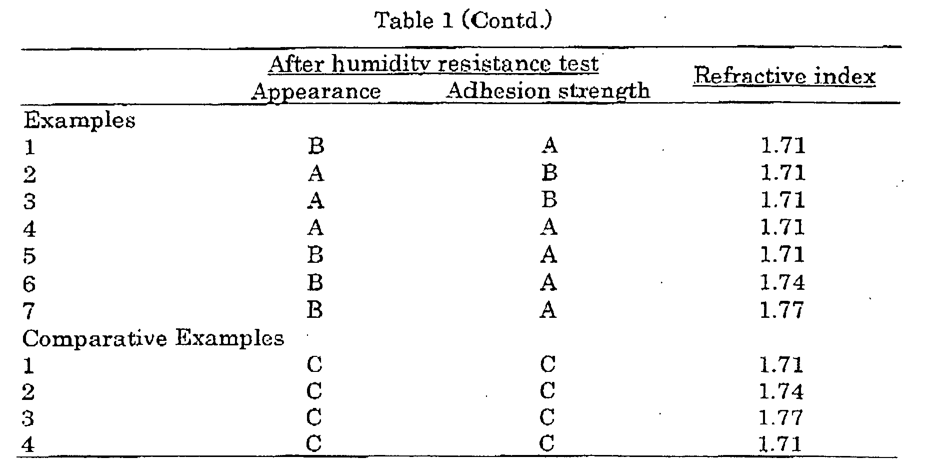

In the process of the invention, the plastic substrate is treated with an acidic substance prior to forming a hard coat. With such a treatment, a hard coat exhibiting a high adhesion strength to the plastic substrate and no change with time in physical properties is formed on the plastic substrate even when the formation of additional intermediate layer such as a primer layer is omitted.

## Claims

1. A process for producing a hard-coated optical material, comprising:
dipping a substrate in an acidic substance, the substrate being made of a cured product produced by polymerizing a composition containing at least one episulfide compound having one or more β-epithiopropylthio structures represented by the following formula 1: 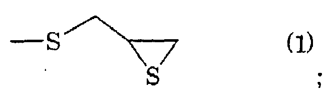 and
forming a hard coat on a surface of the substrate.

2. The process according to claim 1, wherein the hard coat is formed after dipping the substrate in the acidic substance without forming any intermediate layer on the surface of the substrate.

3. The process according to claim 1 or 2, wherein the episulfide compound is represented by the following formula 2: 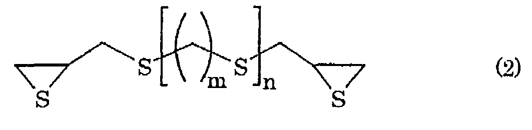 wherein m is an integer from 0 to 4 and n is an integer from 0 to 2.

4. The process according to any one of claims 1 to 3, wherein the composition further contains at least one compound having one or more SH groups.

5. The process according to any one of claims 1 to 4, wherein the acidic substance is at least one compound selected from the group consisting of hydrogen peroxide and inorganic acids.

6. The process according to any one of claims 1 to 5, wherein the acidic substance is sulfuric acid and/or hydrogen peroxide.

7. A hard-coated optical material produced by the process as defined in any one of claims 1 to 6.

## Patentansprüche

1. Verfahren zur Herstellung eines hartbeschichteten optischen Materials, umfassend:
Eintauchen eines Substrats in eine saure Substanz, wobei das Substrat aus einem gehärteten Produkt hergestellt ist, das hergestellt wird durch Polymerisieren einer Zusammensetzung, die mindestens eine Episulfidverbindung enthält, welche eine oder mehr durch die folgende Formel 1 dargestellte β-Epithiopropylthio-Strukturen aufweist: 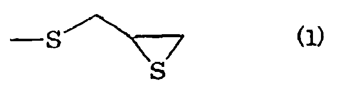 und
Ausbilden einer Hartbeschichtung auf einer Oberfläche des Substrats.

2. Verfahren nach Anspruch 1 , wobei die Hartbeschichtung nach Eintauchen des Substrats in die saure Substanz ohne Ausbildung jeglicher Zwischenschicht auf der Oberfläche des Substrats gebildet wird.

3. Verfahren nach Anspruch 1 oder 2, wobei die Episulfidverbindung durch die folgende Formel 2 dargestellt wird: 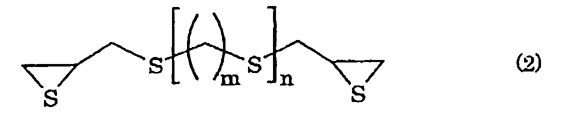 wobei m eine ganze Zahl von 0 bis 4 ist und n eine ganze Zahl von 0 bis 2 ist.

4. Verfahren nach einem der Ansprüche 1 bis 3, wobei die Zusammensetzung darüber hinaus mindestens eine Verbindung enthält, die eine oder mehr SH-Gruppen aufweist.

5. Verfahren nach einem der Ansprüche 1 bis 4, wobei die saure Substanz mindestens eine Verbindung ist, die ausgewählt wird aus der aus Wasserstoffperoxid und anorganischen Säuren bestehenden Gruppe.

6. Verfahren nach einem der Ansprüche 1 bis 5, wobei die saure Substanz Schwefelsäure und/oder Wasserstoffperoxid ist.

7. Hartbeschichtetes optisches Material, hergestellt durch das wie in einem der Ansprüche 1 bis 6 definierte Verfahren.

## Revendications

1. Procédé de fabrication de matériau optique à revêtement dur comprenant les étapes suivantes consistant :
à tremper un substrat dans une substance acide, le substrat étant composé d'un produit durci produit par polymérisation d'une composition contenant au moins un composé d'épisulfure ayant une ou plusieurs structures β-épithiopropylthio représentées par la formule 1 suivante : 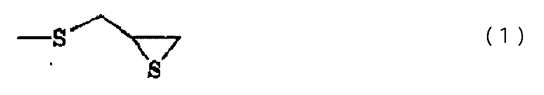 et
à former un revêtement dur sur une surface du substrat.

2. Procédé selon la revendication 1, dans lequel le revêtement dur est formé après avoir trempé le substrat dans la substance acide sans former une couche intermédiaire sur la surface du substrat.

3. Procédé selon la revendication 1 ou 2, dans lequel le composé d'épisulfure est représenté par la formule 2 suivante : 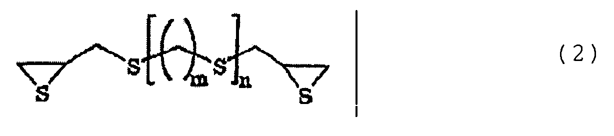 dans laquelle m est un nombre entier allant de 0 à 4 et n est un nombre entier allant de 0 à 2.

4. Procédé selon l'une quelconque des revendications 1 à 3, dans lequel la composition comprend en outre au moins un composé ayant un ou plusieurs groupes SH.

5. Procédé selon l'une quelconque des revendications 1 à 4, dans lequel la substance acide est au moins un composé choisi parmi le groupe constitué d'un peroxyde d'hydrogène et d'acides inorganiques.

6. Procédé selon l'une quelconque des revendications 1 à 5, dans lequel la substance acide est un acide sulfurique et/ou un peroxyde d'hydrogène.

7. Matériau optique à revêtement dur produit par le procédé tel que défini dans l'une quelconque des revendications 1 à 6.
